Europäisches Patentamt

European Patent Office

Office européen des brevets

(19)

(11) Veröffentlichungsnummer : **0 035 217**
B1

(12) **EUROPÄISCHE PATENTSCHRIFT**

(45) Veröffentlichungstag der Patentschrift :
**15.05.85**

(21) Anmeldenummer : **81101312.7**

(22) Anmeldetag : **24.02.81**

(51) Int. Cl.⁴ : **B 67 D   5/08**, B 67 D   5/28,
B 67 D   5/34, B 67 D   5/06

(54) **Vorrichtung zur Verhinderung des Mitmessens gasförmiger Beimengungen bei der Abgabe von Flüssigkeiten.**

(30) Priorität : **29.02.80 DE 3007688**

(43) Veröffentlichungstag der Anmeldung :
**09.09.81 Patentblatt 81/36**

(45) Bekanntmachung des Hinweises .auf die Patenterteilung : **15.05.85 Patentblatt 85/20**

(84) Benannte Vertragsstaaten :
**AT BE CH FR GB IT LI LU NL SE**

(56) Entgegenhaltungen :
**GB-A- 1 052 291**
**US-A- 3 138 291**
**US-A- 3 963 146**

(73) Patentinhaber : **ALFONS HAAR Maschinenbau GmbH
& Co. KG
Fangdieckstrasse 67
D-2000 Hamburg 53 (DE)**

(72) Erfinder : **Lorentz, Werner, Ing.
Radenwisch 36
D-2000 Hamburg 61 (DE)**

(74) Vertreter : **Dipl.-Ing. H. Hauck Dipl.-Phys. W. Schmitz
Dipl.-Ing. E. Graalfs Dipl.-Ing. W. Wehnert Dr.-Ing. W.
Döring
Neuer Wall 41
D-2000 Hamburg 36 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf eine Vorrichtung zur Verhinderung des Mitmessens gasförmiger Beimengungen bei der Abgabe von Flüssigkeiten aus einem ersten in einen zweiten Behälter über eine Förderleitung, in der eine Absperrarmatur und ein Mengenzähler angeordnet sind und an die vor dem Mengenzähler eine Druckmeßvorrichtung angeschlossen ist, deren Ausgangssignal der geodätischen Zulaufhöhe oberhalb vom Druckmeßpunkt proportional ist und auf ein Ventil zwecks Unterbrechung der Abgabe der Flüssigkeit gegeben wird, wenn der gemessene Druck einen ersten Druckwert unterschreitet.

Eine derartige Vorrichtung ist bereits bekannt (US-A-3 138 291). Vor dem Mengenzähler findet eine Druckmessung statt. Das Drucksignal steuert eine Membran, die ihrerseits ein Ventil steuert, das einen Punkt in der Förderleitung hinter dem Mengenzähler mit Atmosphäre verbindet, wenn es geöffnet ist. Eine Verbindung der Förderleitung mit der Atmosphäre findet statt, wenn der Druck vor dem Mengenzähler einen Mindestwert unterschreitet. Es kommt dann zu einer sogenannten Sogbrechung, durch welche die weitere Flüssigkeitszufuhr unterbrochen wird.

Eine Sogbrechung in der beschriebenen Weise ist nur für Abgabesysteme geeignet, die mit Schwerkraftabgabe arbeiten. Bei Verwendung einer Förderpumpe ist eine Sogbrechung naturgemäß nicht möglich.

Eine Steuerung der Abgabe mit Hilfe einer Sogbrechung besitzt einige Nachteile. So kann es zu einem Unterdruck vor dem Mengenzähler kommen, wenn die geodätische Zulaufhöhe und die Geschwindigkeitsdruckhöhe der Flüssigkeit den Druckverlust des Leitungs- und Armaturensystems nicht überdecken. Ferner muß die Sogbrechung sehr kräftig erfolgen, um auch bei ungünstig verlaufender Abgabeleitung hinter dem Mengenzähler eine genügend rasche Reduzierung der Abgabegeschwindigkeit zu erreichen. Wegen der zu berücksichtigenden Reaktionszeiten kommt es bei einer Sogbrechung rasch zu einer Übersteuerung mit einer damit verbundenen unerwünscht starken Reduzierung der Abgabegeschwindigkeit. Die anschließende Aufhebung der Sogbrechung geht wegen der dann nur noch zur Verfügung stehenden geringen geodätischen Zulaufhöhe nur langsam vor sich. Demzufolge steigt auch die Förderleistung nur langsam an, da die in der Ablaufleitung vom Zähler zum Empfangsbehälter befindliche Luft wegen der geringen Flüssigkeitsgeschwindigkeit nur bedingt mitgerissen wird und dadurch der gewünschte Sog sich gar nicht oder nur sehr langsam wieder aufbaut.

Es ist auch bekannt, zur Verhinderung des Mitmessens gasförmiger Beimengungen bei der Abgabe von Flüssigkeiten eine Entgasungseinrichtung vorzusehen, in der die gasförmigen Beimengungen gesammelt und von Zeit zu Zeit entlassen werden (GB-PS 1 052 291). Das im Entgasungsbehälter gesammelte Gas wird unter Umgehung des Mengenzählers in die Förderleitung geleitet. Ein derartiges System mit einer steuerbaren Umgehung des Mengenzählers wird von Eichbehörden normalerweise nicht akzeptiert, da die große Gefahr besteht, daß bei Undichtigkeit der Umgehung eine ständige Umgehung des Zählers zu erheblichen Ablesefehlern führt. Außerdem können derartige Entgasungseinrichtungen ein Mitmessen von Luft oder Gas nicht vermeiden, wenn zwischen der Entgasungseinrichtung und dem Mengenzähler ein Unterdruck und/oder eine Undichtigkeit auftritt. In vielen Fällen, insbesondere bei der Restentleerung und auch bei Auftreten von Unterdruck in Verbindung mit Undichtigkeiten sind gasförmige Beimengungen so fein mit der Flüssigkeit vermischt, daß eine vollständige Abscheidung in der Entgasungseinrichtung erheblich erschwert wird.

Die bekannten Entgasungseinrichtungen sind darüber hinaus verhältnismäßig aufwendig und vergrößern somit den Aufwand für die gesamte Meßanlage. Ferner ist die Abgabeleistung durch die Auslegung einer Entgasungseinrichtung begrenzt. Hinsichtlich der Abgabeleistung stellt die Entgasungseinrichtung naturgemäß das schwächste Glied im gesamten Abgabesystem dar.

Der Erfindung liegt die Aufgabe zugrunde, eine Vorrichtung zur Verhinderung des Mitmessens gasförmiger Beimengungen bei der Abgabe von Flüssigkeiten vorzusehen, welche besonders geringe Meßfehler im Gefolge hat und einen minimalen Aufwand verursacht.

Diese Aufgabe wird erfindungsgemäß dadurch gelöst, daß die Absperrarmatur hinter dem Mengenzähler angeordnet und in ihrem wirksamen Querschnitt regelbar ist und das Ausgangssignal der Druckmeßvorrichtung auf eine Betätigungsvorrichtung für die Absperrarmatur gegeben wird, die ab einem zweiten über dem ersten Druckwert liegenden Druckwert den Durchfluß durch die Absperrarmatur bei kleiner werdendem Druck zunehmend drosselt.

Bei der Erfindung wird auf eine übliche Entgasungseinrichtung verzichtet und statt dessen von vornherein verhindert, daß überhaupt gasförmige Beimengungen im entscheidenden Umfang zum Mengenzähler gelangen. Hierbei wird von der Erkenntnis ausgegangen, daß solange ein ausreichender positiver Druck vor dem Mengenzähler besteht, der Anteil gasförmiger Beimengungen unterhalb zulässiger Grenzen liegt. Fällt der Druck vor dem Mengenzähler ab, beispielsweise wegen der Abnahme der geodätischen Zulaufhöhe bei der Restentleerung eines zu leerenden Behälters, ist hiermit ein Indikator dafür gegeben, daß der Anteil gasförmiger Beimengungen ansteigt. Fällt bei der erfindungsgemäßen Vorrichtung der Druck vor dem Mengenzähler unter den zweiten Druckwert, führt dies zu einer Drosselung der Absperrarmatur mit einer entsprechenden Verringerung der Abgabeleistung. Dadurch wird die Flüssigkeit im zu leerenden Behälter beruhigt (Vermeidung von Turbulenzen infolge Wirbelbildung) und die geodätische Zulaufhöhe kann wieder ansteigen, solange nicht eine vollständige Entleerung stattfindet. Eine Zunahme der geodätischen Zulaufhöhe bewirkt einen erneuten Druckanstieg vor dem Mengenzähler, so daß die Absperrarmatur wieder weiter geöffnet werden kann, um die Abgabeleistung vorübergehend wieder anzuheben. Fällt der Druck vor dem Mengenzähler unterhalb des ersten niedrigen Druckwerts, wird das Absperrventil völlig geschlossen. Durch ein Nachlaufen aus dem zu leerenden Behälter und dem dazwischenliegenden Leitungssystem kann der untere Druckwert im Sinne einer Druckerhöhung wieder überschritten werden, so daß die Absperrarmatur erneut mit begrenztem Wirkungsquerschnitt öffnen kann, um ein langsames Ablaufen des Restes zu bewirken, bis der niedrige erste positive Druckwert zum letzten Mal erreicht und anschließend nicht mehr überschritten wird.

Eine nach der Erfindung arbeitende Vorrichtung bringt weitaus kleinere Fehlertoleranzen mit sich als übliche Vorrichtungen, insbesondere solche mit Entgasungsvorrichtungen. Trotz der erzielbaren hohen Meßgenauigkeit sind das Gewicht und die Baugröße der erfindungsgemäßen Vorrichtung niedriger als bei herkömmlichen Vorrichtungen, so daß z. B. bei Tankwagen die Nutzlast entsprechend erhöht ist. Ein weiterer Vorteil der erfindungsgemäßen Vorrichtung liegt darin, daß sie einen minimalen Druckverlust in der Förderleitung verursacht, so daß die Förderleistung letztlich nur von der Auslegung der Leitungssysteme und der Armaturen abhängig ist. Gegenüber herkömmlichen Abgabevorrichtungen läßt sich daher mit Hilfe der Erfindung eine erhöhte Abgabeleistung erzielen.

Die erfindungsgemäße Vorrichtung kann für alle möglichen Abgabesysteme eingesetzt werden, unabhängig davon, ob sie mit Schwerkraft oder mit Förderpumpen arbeiten. Die erfindungsgemäße Vorrichtung ist auch gleichermaßen einsetzbar bei Anlagen, welche sowohl eine Pumpen- als auch Schwerkraftabgabe wahlweise vorsehen, und zwar sowohl bei Leerschlauch- als auch bei Vollschlauchabgabe. Die Erfindung kann schließlich auch ohne weiteres das sogenannte Gaspendelverfahren berücksichtigen, bei dem variabler Druck in der Gasphase des zu entleerenden Behälters besteht.

Nachfolgend wird auf einige positive Ausgestaltungen der Erfindung eingegangen. Die Drosselung der Absperrarmatur erfolgt in vorteilhafter Weise nach einer progressiven Kennlinie. Demzufolge wird der Wirkungsquerschnitt der Absperrarmatur nicht proportional zur Druckänderung vor dem Mengenzähler geändert, sondern in progressiver Weise, d. h. zunächst bei abfallendem Druck verhältnismäßig langsam und dann stetig überproportional zunehmend.

Der erste Druckwert liegt vorteilhafter Weise oberhalb des atmosphärischen Drucks. Die Messung von atmosphärischem Druck im Bereich der Meßeinrichtung vor dem Mengenzähler würde bedeuten, daß die Leitung an dieser Stelle bereits leer ist. Würde eine vollständige Absperrung der Absperrarmatur erst zu diesem Zeitpunkt erfolgen, wäre es für die Vermeidung der Messung gasförmiger Beimengungen zu spät.

Beim Gaspendelverfahren hingegen sollte der erste Druckwert größer als der Druck in der Gasphase des zu entleerenden Behälters sein, um Auswirkungen des Gasphasendruckes im Hinblick auf die Zumischung von Gasflüssigkeit zu vermeiden.

Bei einer reinen Schwerkraftabgabe kann der Meßpunkt für die Messung des Druckes durch die Druckmeßvorrichtung entweder an der Eintritts- oder an der Austrittsseite des Mengenzählers liegen. Bei der wahlweisen oder ausschließlichen Verwendung einer Förderpumpe mißt die Druckmeßvorrichtung den Flüssigkeitsdruck hingegen auf der Saugseite der Pumpe.

Das Prinzip der erfindungsgemäßen Vorrichtung beruht darauf, daß die Durchflußmenge bei der Abgabe von Flüssigkeiten verringert wird nach Maßgabe der Wahrscheinlichkeit, daß gasförmige Beimengungen eingemischt sind. Als Anzeigewert für das Vorhandensein gasförmiger Beimengungen wird der Druck in der Förderleitung herangezogen. Die Verwendung einer Absperrarmatur zu Verringerung der Durchflußmenge bietet sich an, weil Absperrarmaturen behördlich zumeist ohnehin vorgeschrieben sind. Es ist auch denkbar, bei mit Förderpumpen arbeitenden Abgabesystemen die Förderpumpe regelbar zu machen und die Regeleinrichtung die Fördermenge der Pumpe derart regeln zu lassen, daß bei einem oberen Druckwert die Fördermenge verringert und bei einem niedrigeren Druckwert die Fördermenge Null wird. Es sind Pumpen beliebiger Art bekannt, mit denen der Förderstrom über dem Pumpendruck, die Pumpendrehzahl oder das zyklische Fördervolumen der Pumpe veränderbar gemacht werden kann.

Als Absperrarmatur kann auch eine zweistufige Absperrarmatur verwendet werden. Sie ist in Verbindung mit Abgabesystemen an sich bekannt. Sie wird von Mengenzählern gesteuert, welche voreinstellbar sind. Bei Annäherung an den eingestellten Wert wird die Absperrarmatur auf die kleinere Öffnungsstufe verstellt, damit möglichst genau an den exakt eingestellten Endpunkt herangefahren werden kann.

In Verbindung mit einer Schwerkraftabgabe ist auch bekannt, eine sogenannte Propellerpumpe mit niedriger Druckhöhe einzusetzen. Im Zusammenhang mit der erfindungsgemäßen Vorrichtung kann vor dem Mengenzähler eine Propellerpumpe beliebiger Druckhöhe in der Förderleitung angeordnet werden, die abgestellt wird, wenn die Drosselung der Absperrarmatur beginnt. Die über einen batteriegespeisten Elektromotor angetriebene Propellerpumpe ermöglicht bei Tankstellenbelieferung eine Erhöhung der Schwerkraftabgabegeschwindigkeit, da die erzeugte Druckhöhe ausreichend ist, die Widerstände des Mengenzählers und des zu befüllenden Behälters weitgehend zu kompensieren. Eine Verwendung von normalen Förderpumpen mit Antrieb vom Fahrzeugmotor ist bei der Tankstellenbelieferung nicht erlaubt.

In Unteransprüchen sind vorteilhafte Ausgestaltungen der Erfindung angegeben.

Die Erfindung wird nachfolgend anhand von Zeichnungen näher erläutert.

Figur 1 zeigt schematisch eine erfindungsgemäß ausgebildete Vorrichtung.

Figur 2 zeigt eine Einzelheit der Vorrichtung nach Fig. 1 in teilweise abgewandelter Form.

Ein Tank 10, beispielsweise eines Tankwagens, besitzt drei Kammern 11, 12 und 13. Die Kammern 11 bis 13 haben jeweils eine Ablauföffnung, an die unmittelbar Bodenventile 14, 15 bzw. 16 angeordnet sind. Die Ausgänge der Bodenventile 14 bis 16 führen zu einer Sammelleitung 17, von der eine Abzweigung 18 über eine Förderpumpe 19, einen Mengenzähler 20, eine Absperrarmatur 21, und einen Schlauch 22 zu einem zu befüllenden Tank 23 führt, zum Beispiel einem unterirdischen Tank.

Jedem Bodenventil 14 bis 16 ist ein pneumatischer Verstellzylinder zugeordnet, von denen nur einer, der mit 24 bezeichnet ist, dem Bodenventil 14 zugeordnet gezeichnet ist. Die Betätigung der Stellzylinder 24 erfolgt mit Hilfe eines Steuerblocks 25, der entsprechend in drei Untereinheiten 26, 27 bzw. 28 unterteilt ist, entsprechend der Anzahl der Bodenventile. Jede Untereinheit 26 bis 28 wird durch einen Verstellknopf betätigt, welcher kein Bezugzeichen trägt. Zum Steuerblock 25 gehört ferner eine Untereinheit 29 mit Verstellknopf, deren Ausgang über eine Drossel 30 mit einem Eingang eines 2/3-Wegeventils 31 verbunden ist, dessen Ausgang zu einem Pneumatikzylinder 32 für die Betätigung der Absperrarmatur 21 führt. Der Verstellkolben des Ventils 31 ist mit Hilfe einer Feder 33 federbelastet. Die Kolbenstange 34 greift an die Unterseite einer Membran 35 an, welche zwei Druckkammern 36 und 37 voneinander trennt. Die Membran 35 ist mit Hilfe einer Feder 38 vorgespannt. Während die Kammer 37 über einen Anschluß 39 mit Atmosphäre verbunden ist, steht die Kammer 36 über ein Rohr 40 mit dem Inneren der Abzweigleitung 18 in Verbindung. Die Öffnung 41 des Rohres 40 liegt in der Mitte und im unteren Bereich des vertikalen Abschnitts der Abzweigung 18 und hat somit die Wirkung eines Staurohres, so daß der Druck in der Kammer 36 ein Maß ist für den Druck im Bereich der Öffnung 41 in der Rohrleitungsabzweigung 18. Wie man ohne weiteres erkennt, liegt somit der Druckmeßpunkt 41 auf der Ansaugseite der Förderpumpe 19.

Der Steuerblock 25 wird aus der Druckmittelquelle 42 versorgt, wobei eine Druckmittelleitung 43 zunächst über die Untereinheit 29 geführt ist und erst dann über eine Drossel 44 in Reihe über die Untereinheiten 28, 27, 26. Die Leitung 43 führt am Ausgang des Steuerblocks 25 über ein Drosselrückschlagventil 45 zu einem Impulsventil 46, dessen Ausgang über eine Leitung 47 mit einem weiteren Eingang der Untereinheit 29 verbunden ist. Am Ausgang des Drosselrückschlagventils 45 ist ein Speichervolumen 60 an die Leitung 43 angeschlossen.

Die beschriebene Vorrichtung arbeitet wie folgt. Zur Inbetriebnahme muß zunächst eins der Bodenventile 14 bis 16 geöffnet werden. Dies wird eingeleitet durch Betätigung des zugehörigen Verstellknopfes der zugehörigen Untereinheit. Im vorliegenden Fall zum Beispiel der Untereinheit 26. Infolge des dadurch bedingten Luftverbrauchs in der Leitung 43 entsteht hinter der Drossel und durch das Rückschlagventil 45 ein Druckabfall im Volumen 60 und dementsprechend an der federbelasteten Seite des 2/2-Wege-Impulsventils 46. Dadurch wird der zweite Luftanschluß über die Leitung 47 der Einheit 29 entlüftet, und eine Betätigung der Einheit 29 zwecks Öffnens der Absperrarmatur 21 ist zwar möglich, führt jedoch noch nicht zu einem Öffnen der Absperrarmatur 21. Erst nach Ablauf der durch die Drossel 44 und die Größe des Volumens 60 vorgegebenen Zeit zum Aufbau des nötigen Druckes am Eingang des Impulsventils 46 kann die Absperrarmatur 21 mit Hilfe des Pneumatikverstellzylinders 32 geöffnet werden.

Der gleiche beschriebene Effekt tritt auf beim Öffnen eines anderen Bodenventils. Das Absperrventil unterbricht die Abgabe sofort, und die Wiederinbetriebnahme ist erst nach Ablauf der vorgegebenen Zeit möglich. Dadurch kann eine ausreichende Zeit für die Entlüftung von Lufteinschlüssen im Leitungssystem unterhalb des Tanks 10 in die jeweils geöffnete Kammer gewährleistet werden. Dies setzt allerdings voraus, daß eine ausreichende Entlüftung aus der Sammelleitung 17 möglich ist, d. h. daß ab Beginn des Meßpunktes ein stetiger Leitungsanstieg erfolgt, was jedoch auch bereits aus ablauftechnischen Gründen bei Tankwagen jederzeit gegeben ist.

Selbst wenn am Ausgang des Steuerblocks 25 der nötige zur Verstellung der Absperrarmatur 21 erforderliche Druck aufgebaut ist, bedingt die Drossel 30, daß die Absperrarmatur 21 langsam geöffnet wird. Dadurch steigt der Förderstrom langsam bis zum Maximum an. Es ist ohne weiteres ersichtlich, daß der Druck am Meßpunkt 41 und dementsprechend in der Kammer 36 abhängig ist von der sogenannten geodätischen Zulaufhöhe, d. h. vom Niveau der Flüssigkeit, zum Beispiel in der Kammer 11, aber auch vom Strömungsdruck. Druckverluste im Leitungssystem führen zu einer Reduzierung des absoluten Druckes am Meßpunkt 41. Die Membran 35 in Verbindung mit der Feder 38 und die den nicht gezeigten Kolben vom Ventil 31 beaufschlagende Feder 33 sind so aufeinander abgestimmt, daß ab einem bestimmten niedrigen positiven Druck, angedeutet durch die Druckhöhe h1 die Membran 35 über die Kolbenstange 34 den Kolben des Ventils 31 so verstellt, daß der Druck im Pneumatikzylinder 32 reduziert wird und dadurch eine Drosselung der Absperrarmatur 21 herbeiführt. Diese Drosselung wird progressiv um so größer, je geringer der Druck am Meßpunkt 41 ist. Erreicht der Druck am Meßpunkt 41 die Druckhöhe h2, erfolgt ein Schnellschluß der nur noch teilweise geöffneten Absperrarmatur 21. Nachlaufmengen, insbesondere von den Kammerwandungen, führen in der Regel nach kurzer Zeit zu einem Wiederanstieg des Flüssigkeitsniveaus in der Abzweigleitung 18, so daß das Absperrventil aufgrund der beschriebenen Vorgänge erneut langsam öffnet mit sehr geringem Wirkungsquerschnitt.

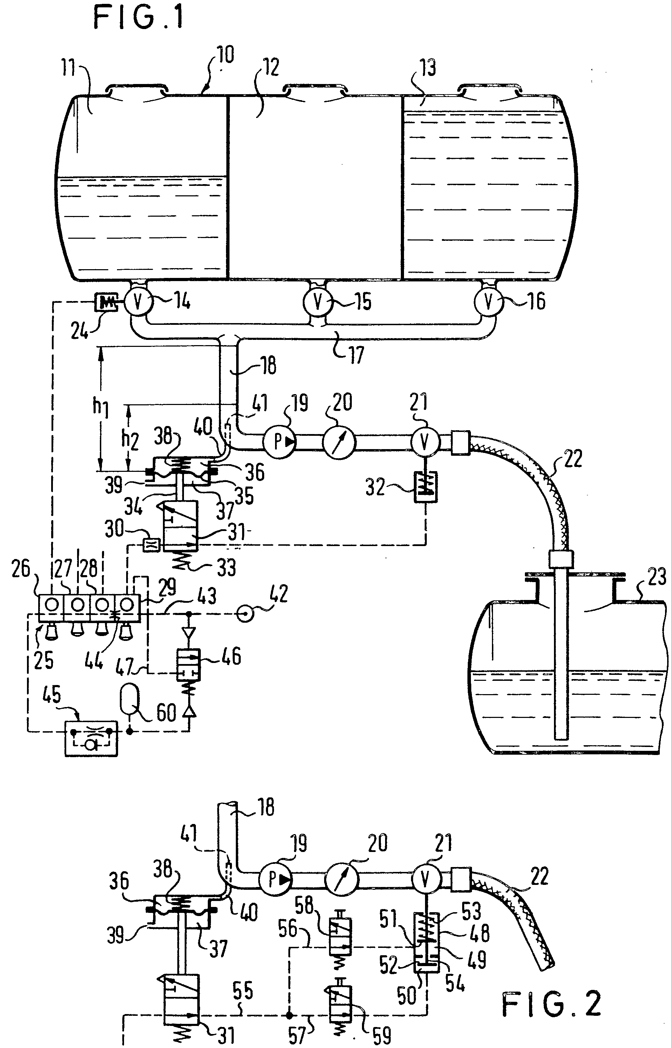

Bei der Ausführungsform nach Fig. 2 sind gemäß der Ausführungsform nach Fig. 1 gleiche Teile mit gleichen Bezugszeichen versehen. Die Absperrarmatur 21 ist von einem Pneumatikverstellzylinder 48 betätigt, der zwei hintereinandergeschaltete Zylinderkammern 49, 50 besitzt mit jeweils einem Kolben 51 bzw. 52. Der Kolben 51 ist mit Hilfe einer Feder nach unten in Richtung des zweiten Kolbens 52 vorgespannt. Der Kolben 52 ist frei beweglich im Zylinder 50 angeordnet und seine Stange 54 ist dichtend in die obere Zylinderkammer 49 hineingeführt. Die vom Ventil 31 kommende Leitung ist in Leitungen 56, 57 aufgezweigt, von denen jede ein federvorgespanntes Drosselventil 58 bzw. 59 enthält. Der Ausgang des Ventils 59 führt zur unteren Zylinderkammer 50, während der Ausgang des Drosselventils 58 zur Zylinderkammer 49 führt. Die Wegeventile 58, 59 sind so ausgeführt, daß bei vollem Druck in der Leitung 55 beide Zylinderkammern 49 und 50 druckbeaufschlagt sind, so daß die Absperrarmatur 21 in seine voll geöffnete Stellung verstellt wird. Sinkt der Druck in der Leitung 55 ab, fällt auch der Druck in der Zylinderkammer 49, was zu einer entsprechenden Drosselung der Absperrarmatur 21 führt. Bei weiter abfallendem Druck stößt der Kolben 51 schließlich gegen die Kolbenstange 54 des in der oberen Stellung befindlichen Kolbens 52, so daß nunmehr die zweite Öffnungsstufe der Absperrarmatur 21 erreicht ist und eine weitere Drosselung durch die gekoppelte Bewegung der Kolben 51 und 52 stattfindet bis zum endgültigen Schließen der Absperrarmatur 21, das dadurch bewirkt wird, daß die Zylinderkammer 50 entlüftet wird und die Feder 53 einen Schnellschluß der Absperrarmatur 21 herbeiführt.

Der Druck in der Kammer 37, der bei dem beschriebenen Ausführungsbeispiel mit Atmosphärendruck gleichgesetzt ist, kann auch durch den Druck in der Gasphase in den Kammern 11 bis 13 bestimmt sein (Gaspendelverfahren), um eine Auswirkung des Druckes in der Gasphase im zu entleerenden Tank 10 auf die Beimischung von Gas in die Flüssigkeit zu verhindern.

Es versteht sich, daß die beschriebene Regeleinrichtung auch doppelt ausgeführt werden kann, wenn eine zweitstufige Absperrarmatur 21 zum Einsatz kommt mit einer Vollöffnungsstufe und einer reduzierten Öffnung, so daß beide Öffnungen geregelt werden können in Abhängigkeit des gemessenen Druckes in der Abzweigleitung 18.

**Patentansprüche**

1. Vorrichtung zur Verhinderung des Mitmessens gasförmiger Beimengungen bei der Abgabe von Flüssigkeiten aus einem ersten (11, 12, 13) in einen zweiten Behälter (23) über eine Förderleitung (17, 18), in der eine Absperrarmatur (21) und ein Mengenzähler (20) angeordnet sind und an die vor dem Mengenzähler (20) eine Druckmeßvorrichtung (35 bis 44) angeschlossen ist, deren Ausgangssignal der geodätischen Zulaufhöle oberhalb vom Druckmeßpunkt proportional ist und auf ein Ventil zwecks Unterbrechung der Abgabe der Flüssigkeit gegeben wird, wenn der gemessen Druck einen ersten Druckwert ($h_2$) unterschreitet, dadurch gekennzeichnet, daß die Absperrarmatur (21) hinter dem Mengenzähler (20) angeordnet und in ihrem wirksamen Querschnitt regelbar ist und das Ausgangssignal der Druckmeßvorrichtung (35 bis 40) auf eine Betätigungsvorrichtung (32) für die Absperrarmatur (21) gegeben wird, die ab einem über dem ersten Druckwert ($h_2$) liegenden zweiten Druckwert ($h_1$) den Durchfluß durch die Absperrarmatur (21) bei kleiner werdendem Druck zunehmend drosselt.

2. Vorrichtung nach Anspruch 1, dadurch gekennzeichnet, daß die Drosselung nach einer progressiven Kennlinie erfolgt.

3. Vorrichtung nach Anspruch 1 oder 2, dadurch gekennzeichnet, daß der erste Druckwert oberhalb des atmosphärischen Druckes liegt.

4. Vorrichtung nach Anspruch 1 oder 2, dadurch gekennzeichnet, daß der erste positive Druckwert größer ist als der Druck in der Gasphase des zu entleerenden Behälters (11, 12, 13).

5. Vorrichtung nach einem der Ansprüche 1 bis 4, bei der eine Förderpumpe vorgesehen ist, dadurch gekennzeichnet, daß die Druckmeßvorrichtung (41, 40, 36, 35, 37) den Flüssigkeitsdruck auf der Saugseite der Pumpe (19) mißt.

6. Vorrichtung nach Anspruch 5, dadurch gekennzeichnet, daß die Förderpumpe (19) regelbar ist und eine Regeleinrichtung die Fördermenge der Pumpe (19) regelt derart, daß bei einem zweiten positiven Druckwert die Fördermenge verringert wird und bei einem ersten niedrigeren positiven Druckwert die Fördermenge Null ist.

7. Vorrichtung nach einem der Ansprüche 1 bis 5, gekennzeichnet durch die Anwendung einer zweistufigen Absperrarmatur.

8. Vorrichtung nach Anspruch 7, dadurch gekennzeichnet, daß die Absperrarmatur eine Vollöffnungsstufe und eine kleinere Öffnungsstufe besitzt, die einzeln oder gemeinsam regelbar sind.

9. Vorrichtung nach einem der Ansprüche 1 bis 8, dadurch gekennzeichnet, daß ein Differenzdruckregler vorgesehen ist, dessen eine Druckkammer (37) mit einem Referenzdruck und dessen andere Druckkammer (36) mit einem dem Druck am Druckmeßpunkt entsprechenden Druck beaufschlagt wird und in Abhängigkeit von der Stellung der zwischen den Kammern (36, 37) angeordneten beweglichen Wand (35) ein Stellbefehl für die Absperrarmatur (21) erzeugt wird.

10. Vorrichtung nach Anspruch 9, dadurch gekennzeichnet, daß die bewegliche Wand eine Membrane (35) ist.

11. Vorrichtung nach Anspruch 9 oder 10, dadurch gekennzeichnet, daß die erste Kammer (36) des Differenzdruckreglers über eine Leitung (40) unmittelbar mit einem Punkt (41) in der Förderleitung (18) verbunden ist.

12. Vorrichtung nach einem der Ansprüche 1 bis 11, dadurch gekennzeichnet, daß die Druckmeßvorrichtung ein in der Förderleitung (18) angeordnetes Staurohr (40) aufweist, das vorzugsweise in der Leitungsmitte angeordnet ist.

13. Vorrichtung nach einem der Ansprüche 1 bis 12, dadurch gekennzeichnet, daß eine vom Mengenzähler (20) gesteuerte Mengenvoreinstelleinrichtung vorgesehen ist, die die Absperrarmatur (21) sperrt, wenn die voreingestellte Menge erreicht ist.

14. Vorrichtung nach einem der Ansprüche 1 bis 13, dadurch gekennzeichnet, daß in Förderrichtung vor dem Flüssigkeitszähler (20) eine Propellerpumpe mit niedriger Druckhöhe in der Förderleitung angeordnet ist und von der Regeleinrichtung abgeschaltet wird, wenn die Drosselung der Absperrarmatur beginnt.

15. Vorrichtung nach einem der Ansprüche 1 bis 14, dadurch gekennzeichnet, daß die Absperrarmatur (21) von einer druckmittelbetätigten Verstelleinrichtung (32) verstellt wird und die Regeleinrichtung ein die Druckmittelzufuhr zur Verstelleinrichtung (32) regelndes Regelventil (31) aufweist, das in Abhängigkeit vom Druck in der Förderleitung verstellt wird.

16. Vorrichtung nach Anspruch 15, dadurch gekennzeichnet, daß eine Drossel (30) in der Leitung zur Verstelleinrichtung (32) angeordnet ist.

17. Vorrichtung nach einem der Ansprüche 1 bis 16, bei der mehrere zu entleerende Behälter vorgesehen sind, von denen jeder ein getrennt betätigbares Bodenventil aufweist, dadurch gekennzeichnet, daß die Regeleinrichtung eine Zwangsschaltung enthält, durch welche die Absperrarmatur (21) automatisch geschlossen wird, wenn ein Bodenventil (14, 15, 16) geöffnet wird.

18. Vorrichtung nach Anspruch 17, dadurch gekennzeichnet, daß die Zwangsschaltung ein Zeitglied (44, 45, 46) aufweist, das nach dem Schließen der Absperrarmatur (21) diese nach Ablauf einer einstellbaren Zeitdauer wieder öffnet.

19. Vorrichtung nach den Ansprüchen 17 und 18, dadurch gekennzeichnet, daß die Betätigungsvorrichtungen (24) der Bodenventile (14, 15, 16) und der Absperrarmatur über ein Druckmittel gesteuert werden, die Betätigungsvorrichtung (29) für die Absperrarmatur (21) aufströmseitig von den Betätigungsvorrichtungen (26 bis 28) für die Bodenventile (14 bis 16) angeordnet ist, eine Drossel (44) in der Druckmittelleitung (43) zwischen der Betätigungsvorrichtung (29) für die Absperrarmatur (21) und die Betätigungsvorrichtungen (26 bis 28) für die Bodenventile (14 bis 16) angeordnet ist, abströmseitig von der letzten Betätigungsvorrichtung (26) ein Speichervolumen (60) und ein Impulsventil (46) in der Druckmittelleitung (43) angeordnet sind und der Ausgang des Impulsventils (46) mit einem Eingang der Betätigungsvorrichtung (29) für die Absperrarmatur (21) verbunden ist derart, daß bei einem Druckabfall am Impulsventil die Betätigungsvorrichtung (29) inaktiviert wird.

20. Vorrichtung nach einem der Ansprüche 1 bis 19, dadurch gekennzeichnet, daß der Druckmeßpunkt (41) im unteren Bereich einer annähernd vertikalen Strecke der Förderleitung (18) liegt.

**Claims**

1. An apparatus for preventing gaseous admixtures being measured along with liquids dispensed from a first (11, 12, 13) into a second container (23) through a supply line (17, 18), said supply line having a shut-off armature (21) and an amount metering device (20) arranged therein and a presure measuring means (35 to 44) connected thereto in front of the amount metering device, the output signal of said pressure measuring device being proportional to the geodetical height of supply flow above the pressure measuring point and being transmitted to a valve for the purpose of interrupting the dispensing of the liquid when the measured pressure falls below a first value of pressure $(h_2)$ characterized in that the shut-off armature (21) is arranged at the rear of the amount metering device (20) and is regulable as to the effective cross sectionnal area thereof and the output signal of the pressure measuring means (35 to 40) is transferred to a actuating means (32) for the shut-off armature (21) which, beginning at a second pressure value $(h_1)$ above the first pressure value $(h_2)$ increasingly throttles the flow through the shut-off armature (21) with decreasing pressure.

2. An apparatus according to claim 2, characterized in that the throttling is effected according to a progressive characteristic.

3. An apparatus according to claim 1 or 2, characterized in that the first pressure value is above the atmospheric pressure.

4. An apparatus according to claim 1 or 2, characterized in that the first positive pressure value is greater than the pressure in the gaseous phase of the container (11, 12, 13) to be emptied.

5. An apparatus according to any one of the claims 1 to 4, having a discharge pump associated therewith, characterized in that the pressure measuring means (41, 40, 36, 35, 37) measures the liquid pressure on the suction side of the pump (19).

6. An apparatus according to claim 5, characterized in that the discharge pump (19) is regulable and a regulating means regulates the amount discharged by the pump (19) in such a manner that at a second positive pressure value the amount of discharge is reduced and with a first lower positive value of pressure the amount of discharge is zero.

7. An apparatus according to any one of the claims 1 to 5, characterized by the use of a two-stage shut-off armature.

8. An apparatus according to claim 7, characterized in that the shut-off armature has a fully opening stage and a less opening stage, which are regulable individually or in common.

9. An apparatus according to any one of the claims 1 to 8, characterized in that a differential pressure indicator is provided, having one pressure chamber (37) biased with a reference pressure and another pressure chamber (36) biased with a pressure corresponding to the pressure at the pressure measuring point, and in that a positioning command is generated for the shut-off armature (21) in response to the position of the movable wall (35) disposed between the chambers (36, 37).

10. An apparatus according to claim 9, characterized in that the movable wall is a diaphragm (35).

11. An apparatus according to claim 9 or 10, characterized in that the first chamber (36) of the differential pressure regulator is connected directly to a point (41) in the discharge line (18) via a line (40).

12. An apparatus according to any one of the claims 1 to 11, characterized in that the pressure measuring means comprises a static tube (40) arranged in the discharge line (18), preferably in the center of the line.

13. An apparatus according to any one of the claims 1 to 13, characterized in that an amount pre-control device is provided which is controlled by the amount metering device (20) and which shuts off the shut-off armature (21) when the preadjusted amount is reached.

14. An apparatus according to any one of the claims 1 to 13, characterized in that an axial-flow pump of low pressure is arranged in the discharge line in front of the liquid metering device (20) in the direction of discharge and is switched off from the regulating means when the throttling of the shut-off armature begins.

15. An apparatus according to any one of the claims 1 to 14, characterized in that the shut-off armature (21) is adjusted by a fluid operated adjusting means (32) and the regulating means comprises a regulating valve (31) regulating the fluid supply to the adjusting means (32) which is adjusted in response to the pressure in the discharge line.

16. An apparatus according to claim 15, characterized in that a throttle (30) is arranged in the line to the adjusting means (32).

17. An apparatus according to any one of the claims 1 to 16, having several containers to be emptied provided therewith each of them comprising a separately operable bottom valve, characterized in that the regulating means comprises a forced circuit by means of which the shut-off armature (21) is automatically closed when a bottom valve (14, 15, 16) is opened.

18. An apparatus according to claim 17, characterized in that the forced circuit comprises a timing element (44, 45, 46) which after the closing of the shut-off armature (21) reopens the latter again after the expiration of an adjustable period of time.

19. An apparatus according to the claims 17 and 18, characterized in that the actuation devices (24) of the bottom valves (14, 15, 16) and the shut-off armature are controlled via a pressure medium, the actuation means (29) for the shut-off armature (21) being arranged upstream of the actuation means (26 to 28) for the bottom valves (14 to 16), a throttle (44) being arranged in the pressure medium line (43) between the actuating means (29) for the shut-off armature (21) and the actuation means (26 to 28) for the bottom valves (14 to 16), a storage volume (60) being disposed downstream of the last actuation means (26) and an impulse valve (46) in the pressure medium line (43), the output of the impulse valve (46) being connected to an input of the actuation means (29) for the shut-off armature (21) in such a manner that with a pressure drop at the impulse valve the actuation means (29) is inactivated.

20. An apparatus according to any one of the claims 1 to 19, characterized in that the pressure measuring point (41) is disposed in the lower region of an approximately vertical section of the discharge line (18).

### Revendications

1. Dispositif pour éviter la mesure conjointe d'additions gazeuses lors du transfert de liquides d'un premier réservoir (11, 12, 13) à un deuxième réservoir (23) par l'intermédiaire d'une conduite d'alimentation (17, 18) dans laquelle un robinet d'arrêt (21) et un totalisateur de quantités (20) sont disposés et à laquelle est raccordé, avant le totalisateur (20), un dispositif manométrique (35 à 44), dont le signal de sortie est proportionnel à la hauteur d'entrée géodésique au-dessus du point de mesure de la pression et appliqué sur une soupape pour interrompre l'écoulement du liquide, lorsque la pression mesurée passe en dessous d'une première valeur de pression, caractérisé en ce que le robinet d'arrêt (21) est disposé après le totalisateur (20) et a sa section utile réglable et en ce que le signal de sortie du dispositif manométrique (35 à 40) est appliqué à un dispositif d'actionnement (32) du robinet d'arrêt (21), qui étrangle de plus en plus le débit passant par le robinet d'arrêt (21) lorsque la pression diminue, à partir d'une deuxième valeur de pression ($h_1$) supérieure à la première valeur de pression ($h_2$).

2. Dispositif selon la revendication 1, caractérisé en ce que l'étranglement s'effectue selon une caractéristique progressive.

3. Dispositif selon la revendication 1 ou 2, caractérisé en ce que la première valeur de pression se trouve au-dessus de la pression atmosphérique.

4. Dispositif selon la revendication 1 ou 2, caractérisé en ce que la première valeur de pression positive est plus grande que la pression dans la phase gazeuse du réservoir à vider (11, 12, 13).

5. Dispositif selon l'une des revendications 1 à 4, dans lequel il est prévu une pompe d'alimentation, caractérisé en ce que le dispositif manométrique (41, 40, 36, 35, 37) mesure la pression du liquide au côté aspiration de la pompe (19).

6. Dispositif selon la revendication 5, caractérisé en ce que la pompe d'alimentation (19) est réglable et en ce qu'un mécanisme de réglage règle la quantité débitée par la pompe (19) de façon que pour une deuxième valeur de pression positive la quantité débitée soit réduite et que pour une première valeur de pression positive plus basse la quantité débitée soit nulle.

7. Dispositif selon l'une des revendications 1 à 5, caractérisé par l'emploi d'un robinet d'arrêt à deux étages.

8. Dispositif selon la revendication 7, caractérisé en ce que le robinet d'arrêt comprend un étage à pleine ouverture et un étage à plus petite ouverture, qui sont réglables isolément ou conjointement.

9. Dispositif selon l'une des revendications 1 à 8, caractérisé en ce qu'il est prévu un régulateur de différence de pression, dont une chambre de pression (37) est exposée à une pression de référence, et l'autre chambre de pression (36), à une pression correspondant à celle au point de mesure de la pression et en ce qu'il est produit, en fonction de la position de la paroi mobile (35) disposée entre les chambres (36, 37), un ordre de manœuvre du robinet d'arrêt (21).

10. Dispositif selon la revendication 9, caractérisé en ce que la paroi mobile est une membrane (35).

11. Dispositif selon la revendication 9 ou 10, caractérisé en ce que la première chambre (36) du régulateur de différence de pression est reliée directement par une conduite (40) à un point (41) de la conduite d'alimentation (18).

12. Dispositif selon l'une des revendications 1 à 11, caractérisé en ce que le dispositif manométrique comporte une trompe (40), disposée dans la conduite d'alimentation (18) qui est placée de préférence au milieu de la conduite.

13. Dispositif selon l'une des revendications 1 à 12, caractérisé en ce qu'il est prévu un agencement de réglage des quantités, commandé par le totaliseur (20), qui ferme le robinet d'arrêt (21), lorsque la quantité préfixée est atteinte.

14. Dispositif selon l'une des revendications 1 à 13, caractérisé en ce que dans la conduite d'alimentation il est disposé dans la direction du débit, avant le totalisateur (20), une pompe centrifuge à faible hauteur de pression, qui est coupée par l'agencement de réglage lorsque l'étranglement du robinet d'arrêt commence.

15. Dispositif selon l'une des revendications 1 à 14, caractérisé en ce que le robinet d'arrêt est déplacé par un organe de manœuvre (32) actionné par un fluide sous pression et en ce que l'agencement de réglage comporte une soupape de réglage (31) réglant l'arrivée du fluide sous pression à l'organe de manœuvre (32), qui est déplacé en fonction de la pression dans la conduite d'alimentation.

16. Dispositif selon la revendication 15, caractérisé en ce qu'un étranglement (30) est disposé dans le conduit allant à l'organe de manœuvre (32).

17. Dispositif selon l'une des revendications 1 à 16, dans lequel il est prévu plusieurs réservoirs à vide, dont chacun comporte une vanne de fond pouvant être actionnée séparément, caractérisé en ce que l'agencement de réglage comprend un circuit de commande contraignant, grâce auquel le robinet d'arrêt (21) est automatiquement fermé lorsqu'une vanne de fond (14, 15, 16) est ouverte.

18. Dispositif selon la revendication 17, caractérisé en ce que ledit circuit de commande comporte un élément temporisé (44, 45, 46) qui rouvre le robinet d'arrêt (21) après fermeture de celui-ci, au bout d'un laps de temps réglable.

19. Dispositif selon les revendications 17 et 18, prises ensemble, caractérisé en ce que les dispositifs d'actionnement (24) des vannes de fond (14, 15, 16) et du robinet d'arrêt sont commandés par un fluide sous pression, en ce que le dispositif d'actionnement (29) du robinet d'arrêt est disposé en amont des dispositifs d'actionnement (26 à 28) des vannes de fond (14 à 16) en ce qu'un étranglement (44) dans le conduit (43) du fluide sous pression est disposé entre le dispositif d'actionnement (29) du robinet d'arrêt (21) et les dispositifs d'actionnement (26 à 28) des vannes de fond (14 à 16) avec en amont du dernier dispositif d'actionnement (26) un volume accumulateur (60) et une soupape à impulsion (46) dans le conduit (43) à fluide sous pression et en ce que la sortie de la soupape à impulsion (46) est reliée à une entrée du dispositif d'actionnement (29) du robinet d'arrêt (21) de façon que lors d'une chute de pression dans la soupape à impulsion le dispositif d'actionnement (29) soit mis au repos.

20. Dispositif selon l'une des revendications 1 à 19, caractérisé en ce que le point de mesure de pression (41) se trouve dans la zone inférieure d'une partie sensiblement verticale de la conduite d'alimentation (18).

# FIG.1

# FIG.2